# EUROPÄISCHE PATENTSCHRIFT

(11) **EP 3 811 478 B1**
(45) Veröffentlichungstag und Bekanntmachung des Hinweises auf die Patenterteilung: **16.04.2025**
(21) Anmeldenummer: 19731261.4
(22) Anmeldetag: 14.06.2019
(51) Int. Cl.: H02G 1/12

(54) **VORRICHTUNG UND VERFAHREN ZUM ABISOLIEREN VON KABELN**
DEVICE AND METHOD FOR STRIPPING CABLES
DISPOSITIF ET PROCÉDÉ DESTINÉS À DÉNUDER DES CÂBLES

(30) Priorität: 20.06.2018 AT 504952018
(43) Veröffentlichungstag der Anmeldung: 28.04.2021
(73) Patentinhaber: komax Holding AG, 6036 Dierikon (CH)
(72) Erfinder: KHU, Peter, 1210 Wien (AT)
(74) Vertreter: Patentanwälte Pinter & Weiss OG
(86) Internationale Anmeldenummer: PCT/EP2019/065699
(87) Internationale Veröffentlichungsnummer: WO 2019/243193

(56) Entgegenhaltungen:
- DE-B- 1 073 050
- US-A- 3 636 799
- US-A- 5 361 653

## Beschreibung

Die Erfindung betrifft eine Vorrichtung zum Abisolieren eines Kabels, wobei die Vorrichtung eine Stützrollenanordnung und eine Arbeitsradanordnung aufweist, wobei ein Ende des abzuisolierenden Kabels unter Aufbringung einer Andruckkraft zwischen der Arbeitsradanordnung und der Stützrollenanordnung einklemmbar ist, wobei die Einheit aus Arbeitsradanordnung und Stützrollenanordnung um eine Rotationsachse rotierend um das Kabel herum abrollend antreibbar ist. Weiters betrifft die Erfindung ein Verfahren zum Abisolieren eines Kabels, wobei ein Ende des abzuisolierenden Kabels unter Aufbringung einer Andruckkraft zwischen einer Arbeitsradanordnung und einer Stützrollenanordnung eingeklemmt wird, wobei die Einheit aus Arbeitsradanordnung und Stützrollenanordnung um eine Rotationsachse rotierend um das Kabel herum abrollend angetrieben wird

Geschirmte Kabel bestehen im Wesentlichen aus einer geschirmten Leitungsanordnung, die einen oder mehrere Leiter aufweist, zumindest eine Abschirmlage und einen Schutzmantel. Die Abschirmlage und der Schutzmantel sind konzentrisch um die Leitungsanordnung angeordnet, wobei die Abschirmlage den Innenleiter gegen elektrische oder magnetische Felder abschirmt und der um die Abschirmlage angeordnete Schutzmantel insbesondere einen mechanischen Schutz gegen Außeneinflüsse bietet.

Zum Anschließen geschirmter Kabel ist es erforderlich, den Schutzmantel in einem gewissen Abstand vom Kabelende rund um das Kabel zu durchtrennen und dann von der Abschirmlage abzuziehen. Dabei muss jedoch die Abschirmlage intakt bleiben, da ansonsten eine korrekte Abschirmung im Bereich der Anschlussstelle nicht gewährleistet ist.

Die Abschirmlage besteht im Allgemeinen aus einem äußerst dünnen und empfindlichen Material, beispielsweise aus einer dünnen Aluminiumfolie, Kunststofffolie, einem filigranen Drahtgeflecht oder aus mehreren solchen Schichten. Der Schutzmantel hingegen muss aus einem widerstandsfähigen Material bestehen, beispielsweise aus widerstandsfähigen Kunststoffen, wie etwa PUR, PVC, Silikon, etc.

Das Abisolieren geschirmter Kabel erfolgt daher meist händisch und erfordert Fingerspitzengefühl und Erfahrung. Auch bekannte mechanische Hilfsmittel, wie etwa Abisolierzangen oder Drehschneider erfordern eine sehr sorgfältige und erfahrene Handhabung, da auch mit ihnen die Abschirmung leicht zerstört werden kann.

Besonders das Montieren zahlreicher geschirmter Kabelanschlüsse, wie das etwa in der industriellen Produktion von Elektroautos erforderlich ist, kann daher ein zeitraubendes Unterfangen sein.

EP 2 693 581 A1 offenbart eine Vorrichtung zum Abisolieren geschirmter Kabel mit einer um das Kabel drehbaren Klingenanordnung, deren Zustellung zur Einbringung eines Schnittes in den Schutzmantel veränderbar ist. Eine elektronische Detektionsvorrichtung ermittelt, wenn die Klingen mit der Abschirmung in Kontakt gelangen, allerdings ist es in der Regel zu spät, wenn die Detektionsvorrichtung anschlägt, da der Schirm, respektive der Leiter bereits eingeschnitten bzw. verletzt wurde.

Aus der DE 1 073 050 ist eine Vorrichtung zum Freilegen von mit Isolierstoff umhüllten Leitungen bekannt. Bei dieser Vorrichtung wird die abzuisolierende Leitung in einer Richtung einer feststehenden Spannzange durch ein Handrad geführt, wobei Rollen als Gegenlager für die abzuisolierende Leitung dienen. Mit einem auf einem Messerträger angebrachten Rundmesser wird ein Ringschnitt ausgeführt, wenn ein Drehteller, auf welchem der Messerträger angebracht ist, gedreht wird. Ein Längsschnitt, um das Kabel abzuisolieren, wird ausgeführt, indem der Messerträger verschoben wird und die Spannzange gelöst wird, um das Kabel herauszuziehen.

Die US 3,636,799 A und die US 5,361,653 A zeigen ebenfalls Vorrichtungen, um Isolierungen von Kabeln oder Elemente aus leitfähigem Material zu entfernen. Die
US 3,636,799 A verwendet dazu, ein Paar gegenüberliegender erhitzter Abisolierklingen mit stumpfen Kanten, welche gegen die Isolierung gedrückt wird, um die Isolierung thermisch zu ermüden. Bei Drehen dringen die erhitzten Abisolierklingen in die Isolierung ein, sodass diese entfernt werden kann. Diese Vorgehensweise zum Abisolieren von Kabeln ist allerdings mit einem relativ großen Aufwand (z.B. Erhitzen der Abisolierklingen, etc.) verbunden. Bei der US 5,361,653 A geht es eher darum, eine Schutzschicht oder ein isolierendes Element (z.B. Folie, Hülle, etc.) von einem elektrisch leitenden Element zu entfernen.

Es ist die Aufgabe der gegenständlichen Erfindung, Vorrichtungen und Verfahren bereitzustellen, mit denen das Abisolieren von Kabeln, insbesondere von geschirmten Kabeln, auch von ungeübten Benutzern schnell, einfach und sicher durchgeführt werden kann, oder aber auch als Bestandteil mit hoher Prozesssicherheit in der automatisierten Kabelkonfektion eingesetzt werden kann.

Diese Aufgabe wird erfindungsgemäß durch eine Vorrichtung der eingangs genannten Art gelöst, wobei die Arbeitsradanordnung zumindest ein Walzrad und zumindest ein Schneiderad aufweist, die entlang eines Schnittbereichs am Umfang des Kabels abrollen, wobei das zumindest eine Walzrad eine stumpfere Randgeometrie als das Schneiderad aufweist, und dass der radial äußere Rand des zumindest einen Walzrades näher an der Rotationsachse angeordnet ist, als der radial äußere Rand des Schneiderades.

In vorteilhafter Weise kann die Stützrollenanordnung an einer Rotationsbasis angeordnet sein, wobei die Arbeitsradanordnung an einer Arbeitsradführung angeordnet ist und wobei die Rotationsbasis und die Arbeitsradführung über zumindest eine Linearführung miteinander verbunden sind und entlang einer Quer zur Rotationsachse verlaufenden Führungsrichtung gegeneinander verschiebbar sind. Dadurch lässt sich die Andruckkraft auf einfache Weise erzeugen, wobei gegebenenfalls Federn oder entsprechende Stelleinrichtungen die Andruckkraft erzeugen und regeln können.

In vorteilhafter Weise kann die Länge und/oder Position der Linearführung etwa mittels Begrenzungselementen und/oder Stellschrauben verstellbar sein. Dadurch lässt sich die Vorrichtung auf einfache Weise an unterschiedliche Kabelstärken anpassen.

In einer vorteilhaften Ausführungsform kann die Arbeitsradführung bezogen auf die Rotationsachse eine exzentrische Gewichtsverteilung aufweisen, wobei eine die Andruckkraft bewirkende Zentrifugalkraft auf die Arbeitsradführung wirkt, wenn die Rotationsbasis mit der daran über die Linearführungen angeordneten Arbeitsradführung um die Rotationsachse rotiert. Dabei sind keinerlei Spannfedern oder Stelleinrichtungen zur Erzeugung der Andruckkraft erforderlich.

Die Arbeitsradanordnung weist zumindest ein Walzrad auf. Die Verwendung eines Walzrades hat den Vorteil, dass das am Mantel entlang eines Schnittbereichs abrollende Walzrad das Material des Mantels solange ermürbt, bis schließlich der Mantel dem Druck des Walzrades nicht mehr standhält und dieses den Mantel durchtrennt. In die härtere und festere Abschirmlage hingegen kann das Walzrad nicht eindringen und diese bleibt daher unbeschädigt.

In einer weiteren vorteilhaften Ausgestaltung kann die Arbeitsradanordnung zumindest zwei Walzräder aufweisen, die gegebenenfalls eine unterschiedliche Randgeometrie aufweisen. Dies beschleunigt die Ermürbung des Mantelmaterials. Durch unterschiedliche Randgeometrien kann das Mantelmaterial in der Art einer "Knetbewegung" jeweils in unterschiedlicher Weise verformt werden, was ebenfalls den Ermürbungsvorgang beschleunigt. Die einzelnen Walzräder können entweder hintereinander im Wesentlichen entlang derselben Linie abrollen, oder sie können in dem Schnittbereich seitlich versetzt zueinander angeordnet sein. Gegebenenfalls können die äußeren Ränder der einzelnen Walzräder auch eine leicht unterschiedliche Entfernung zur Rotationsachse aufweisen.

In einer weiteren vorteilhaften Ausgestaltung der Erfindung kann zumindest ein Element der Arbeitsradanordnung als Taumelrad ausgeführt sein. Dies kann beispielsweise durch eine gegenüber der Normalen zur Radebene leicht schräg angeordnete Achse erfolgen oder durch einen gegenüber der Radebene gewellten Verlauf des äußeren Randes, etwa in Form eines sogenannten "Achters". Dadurch wird das Mantelmaterial bei jeder "Umrundung" des Walzrades mehrmals hin und her gedrückt, was die Materialermüdung und -ermürbung beschleunigt.

Die Arbeitsradanordnung weist zumindest ein Walzrad und zumindest ein Schneiderad auf, die entlang eines Schnittbereichs am Umfang des Kabels abrollen, wobei das Walzrad eine stumpfere Randgeometrie als das Schneiderad aufweist. Das stumpfere Walzrad kann dadurch das Material des Schutzmantels des Kabels durch Walzen künstlich ermüden und mürbe machen, wobei aber ein Eindringen des Schneiderades in die zu schützende Abschirmlage und/oder Leitungsanordnung verhindert wird, wenn das Walzrad dran abrollt.

Der radial äußere Rand des Walzrades ist näher an der Rotationsachse angeordnet, als der radial äußere Rand des Schneiderades. Dadurch wird eine Beschädigung der Abschirmlage und/oder Leitungsanordnung sicher verhindert.

In vorteilhafter Weise kann das Walzrad einen größeren Radius aufweisen, als das Schneiderad. Damit kann die Differenz der Zustellung von Walzrad und Schneidrad auf einfache Weise hergestellt werden, wobei die Drehachsen von Walzrad und Schneiderad in derselben Entfernung von der Rotationsachse angeordnet werden.

In einer weiteren vorteilhaften Ausführungsform kann zumindest ein Walzrad beheizbar sein.

In vorteilhafter Weise kann an zumindest ein Element der Arbeitsradanordnung, insbesondere an ein Walzrad und/oder Schneiderad und/oder eine Elektrode eine elektrische Spannung anlegbar sein. Durch diese elektrische Spannung können Funken erzeugt werden, die das Material des Schutzmantels und/oder einer Grenzschicht in gezielter Weise schwächt und ein sauberes Abtrennen ermöglicht. Insbesondere kann mithilfe der Funkenerosion eine elektrisch leitende Grenzschicht, die bei einigen Kabeltypen zwischen der Abschirmlage und dem Schutzmantel vorgesehen ist, gezielt bei einer Umdrehung der Arbeitsradanordnung mittels Funkenerosion so geschwächt bzw. perforiert werden, dass ein "Ausfransen" dieser Grenzschicht beim Abziehen des Schutzmantels vermieden wird. Die Funken entstehen dabei zwischen dem Walzrad oder dem Schneiderad oder der Elektrode, an dem (der) die elektrische Spannung angelegt ist, und der Metallbeschichtung der Grenzschicht und/oder der Abschirmlage. Die Spannung wird vorzugsweise erst dann angelegt, wenn sich die Arbeitsradanordnung bereits der Abschirmlage ausreichend angenähert hat. Durch eine auf eine Umdrehung angepasste Dauer der Anwendung der Funkenerosion kann eine Beeinträchtigung der Abschirmlage, etwa eine Schädigung eines gegebenenfalls vorhandenen Abschirmgeflechts oder einer leitenden Folie, vermieden werden.

Beim eingangs genannten Verfahren zum Abisolieren eines Kabels wird erfindungsgemäß rollen zumindest ein Walzrad und zumindest ein Schneiderad der Arbeitsradanordnung entlang eines Schnittbereichs am Umfang des Kabels ab, wobei das zumindest eine Walzrad eine stumpfere Randgeometrie als das Schneiderad aufweist, und wobei der radial äußere Rand des zumindest einen Walzrades näher an der Rotationsachse angeordnet wird, als der radial äußere Rand des Schneiderades.

In vorteilhafter Weise kann die Stützrollenanordnung an einer Rotationsbasis angeordnet sein, wobei die Arbeitsradanordnung an einer Arbeitsradführung angeordnet ist und wobei die Rotationsbasis und die Arbeitsradführung über zumindest eine Linearführung miteinander verbunden sind und entlang einer Quer zur Rotationsachse verlaufenden Führungsrichtung gegeneinander verschiebbar sind.

In einer vorteilhaften Ausführungsform kann die Arbeitsradführung bezogen auf die Rotationsachse eine exzentrische Gewichtsverteilung aufweisen, wobei eine die Andruckkraft bewirkende Zentrifugalkraft auf die Arbeitsradführung wirkt, wenn die Rotationsbasis mit der daran über die Linearführungen angeordneten Arbeitsradführung um die Rotationsachse rotiert.

Zumindest ein Walzrad der Arbeitsradanordnung rollt entlang eines Schnittbereichs am Umfang des Kabels ab, wodurch das Mantelmaterial ermürbt wird.

In einer weiteren vorteilhaften Ausführungsform können zumindest zwei Walzräder der Arbeitsradanordnung, die gegebenenfalls eine unterschiedliche Randgeometrie aufweisen können, entlang eines Schnittbereichs am Umfang des Kabels abrollen.

In vorteilhafter Weise kann zumindest ein Element der Arbeitsradanordnung entlang eines Schnittbereichs am Umfang des Kabels taumelnd abrollen.

Das Verfahren wird mit einer Arbeitsradanordnung durchgeführt, die zumindest ein Walzrad und zumindest ein Schneiderad aufweist, die entlang eines Schnittbereichs am Umfang des Kabels abrollen, wobei das Walzrad eine stumpfere Randgeometrie als das Schneiderad aufweist.

Der radial äußere Rand des Walzrades ist näher an der Rotationsachse angeordnet, als der radial äußere Rand des

Schneiderades. Anstelle des Schneiderades könnte in diesem Fall auch eine feststehende Schneide verwendet werden, da ein in Kontakt kommen der Schneide mit der Abschirmlage ausgeschlossen werden kann.

Bevorzugter Weise kann ein Walzrad verwendet werden, dass einen größeren Radius aufweist als das Schneiderad.

In einer weiteren vorteilhaften Ausführungsform kann das Walzrad beheizt werden.

Die Rotationsbasis kann erfindungsgemäß in vorteilhafter Weise mit einer maximalen Geschwindigkeit zwischen 3000 U/min und 5000 U/min, vorzugsweise zwischen 3500 U/min und 4500 U/min angetrieben werden, sodass ein Abisoliervorgang sehr schnell ausgeführt werden kann.

In vorteilhafter Weise kann an zumindest ein Element der Arbeitsradanordnung, insbesondere ein Walzrad und/oder Schneiderad und/oder eine Elektrode, eine elektrische Spannung angelegt werden, um das Material von zumindest einem Teil des Schutzmantels durch Funkenerosion zu schwächen bzw. zu perforieren. Das Anlegen der Spannung kann in vorteilhafter Weise mit der Regelung des Antriebs der Rotationsbasis, mit dem Vorschub der Arbeitsradanordnung und/oder mit der radialen Position der Rotationsbasis bzw. deren Umdrehung koordiniert werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine beispielhafte Ausführungsform der erfindungsgemäßen Vorrichtung zum Abisolieren von Kabeln schematisch in einer Draufsicht,
Fig. 2 die in Fig. 1 dargestellte Vorrichtung in einer Schnittansicht entlang der Linie II-II in Fig. 1,
Fig. 3 ein schematisch im Querschnitt dargestelltes Kabel, das zum Abisolieren in der erfindungsgemäßen Vorrichtung angeordnet ist und die am Kabel angreifende Arbeitsrad- und Stützrollenanordnung,
Fig. 4 ein schematisch im Querschnitt dargestelltes Kabel und die am Kabel angreifende Arbeitsrad- und Stützrollenanordnung gemäß einer weiteren Ausführungsform,
Fig. 5 ein schematisch im Querschnitt dargestelltes Kabel und die am Kabel angreifende Arbeitsrad- und Stützrollenanordnung gemäß einer weiteren Ausführungsform
Fig. 6 ein schematisch im Querschnitt dargestelltes Kabel und die am Kabel angreifende Arbeitsrad- und Stützrollenanordnung gemäß einer weiteren Ausführungsform und
Fig. 7 eine alternative Ausführungsform eines Arbeitsrades, das als Taumelrad ausgeführt ist, in einer Querschnittsdarstellung.

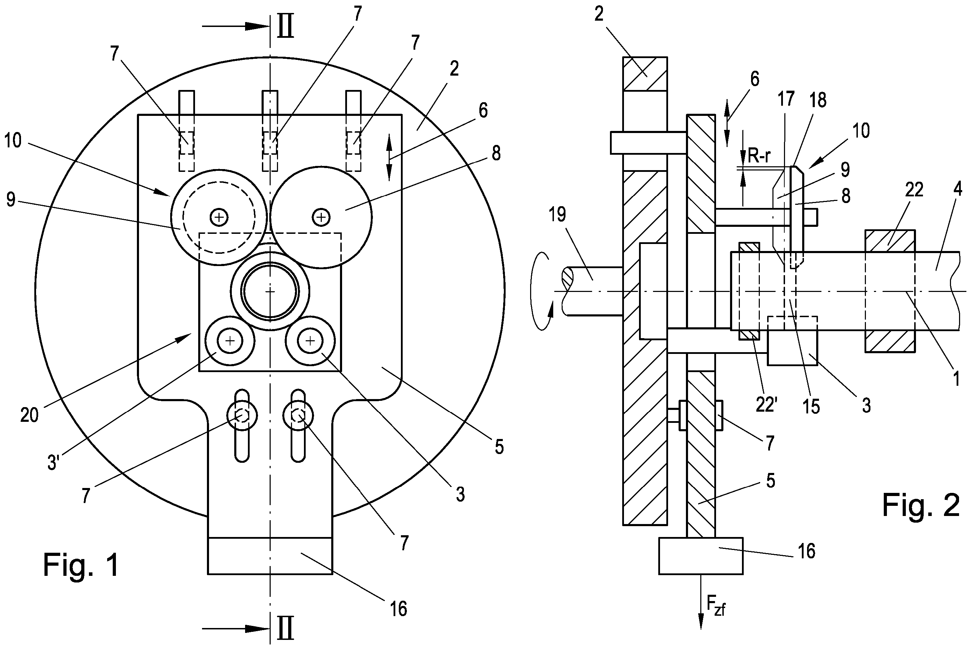

Die in Fig. 1 und 2 beispielhaft dargestellte Vorrichtung zum Abisolieren eines Kabels 14 weist eine um eine Rotationsachse 1 drehbare, plattenförmig ausgebildete Rotationsbasis 2 auf, an deren Vorderseite eine Stützrollenanordnung 20 bestehend aus einem Paar Stützrollen 3, 3' angeordnet ist. Die Rotationsbasis 2 kann beispielsweise über eine Welle 19 mit einem Motor (nicht dargestellt) verbunden sein, der die Rotationsbasis 2 antreibt. Die Drehachsen der Stützrollen 3, 3' sind parallel zur Rotationsachse 1 angeordnet und weisen einen Abstand zur Rotationsachse 1 auf, der in Bezug auf den Durchmesser eines abzuisolierenden Kabels 4 so gewählt ist, dass das auf den Stützrollen 3, 3' angeordnete Kabel 4 mittig auf die Rotationsachse 1 ausgerichtet ist. Gegebenenfalls kann die Position der Stützrollen verstellt werden, um die Vorrichtung auf Kabel unterschiedlicher Dicke einstellen zu können. Während des Abisolierens bleibt die Position der Stützrollen 3, 3' jedoch in Bezug auf die rotierende Rotationsbasis 2 unverändert, wobei sich die Stützrollen um das Kabel 4 herumbewegen und auf dessen Außenfläche abrollen.

An der Rotationsbasis 2 ist eine plattenförmig ausgebildete Arbeitsradführung 5 angeordnet, die in einer Quer zur Rotationsachse 1 verlaufenden Führungsrichtung 6 (d.h. parallel zur Plattenebene) verschiebbar ist. Die Arbeitsradführung 5 kann beispielsweise über eine oder mehrere Linearführungen 7 mit der Rotationsbasis 2 verbunden sein, wobei die in Fig. 1 und 2 dargestellten Linearführungen 7 als Schlitzführungen ausgeführt sind, bei denen Gleitkörper in Führungsschlitzen verschiebbar angeordnet sind. Es können jedoch beliebig ausgebildete Linearführungen 7 verwendet werden. Gegebenenfalls kann die Länge der Linearführungen 7 beispielsweise über verstellbare Begrenzungselemente (wie etwa Stellschrauben) verstellt und/oder begrenzt werden. Verwendbare Linearführungen 7 und entsprechende Begrenzungselemente sind dem Fachmann hinlänglich bekannt und müssen daher hierin nicht näher beschrieben werden. Bei der Auslegung der Linearführungen 7 ist auf eine ausreichende Bewegungspräzision zu sorgen.

Die Rotationsbasis 2 kann gegebenenfalls mit einer zentralen Ausnehmung 21 versehen sein, in die das Ende des Kabels hineinragen kann, sodass der Raumbedarf der rotierenden Teile minimiert werden kann. Die Ausnehmung 21 ist in Fig. 1 lediglich schematisch angedeutet, sie kann auch jedoch deutlich tiefer ausgebildet sein.

An der Arbeitsradführung 5 sind eine Arbeitsradanordnung 10 bestehend aus einem Walzrad 8 und einem Schneiderad 9 angeordnet. Walzrad 8 und Schneiderad 9 weisen jeweils eine parallel zur Rotationsachse 1 angeordnete Drehachse auf. Bezogen auf Rotationsachse 1 (und die darin definierte Position des Kabels 4) ist die Arbeitsradanordnung 10 in Führungsrichtung 6 an der den Stützrollen 3, 3' gegenüberliegenden Seite angeordnet, sodass das an den Stützrollen 3, 3' aufliegende Kabel 4 durch ein Verschieben der Arbeitsradanordnung 10 in Führungsrichtung 6 zwischen den Stützrollen 3, 3' und der Arbeitsradanordnung 10 einklemmbar ist. Wenn nun die Rotationsbasis 2 um die Rotationsachse 1 rotiert, rollen die Stützrollen 3, 3', das Walzrad 8 und das Schneiderad 9 am Umfang des Kabels 4, d.h. an dessen Schutzmantel 14, entlang eines Schnittbereichs 15 ab.

Es ist zu beachten, dass der Schnittbereich 15 keine Schnittlinie ist, sondern einen Bereich kennzeichnet, in dem der Schutzmantel 14 des Kabels durchtrennt werden soll. Wie in weitere Folge erläutert wird, erstreckt sich die Wirkung des Walzrades 8 auch über den Bereich des direkten Kontakts zwischen Walzrad 8 und Schutzmantel 14 seitlich hinaus, sodass Walzrad 8 und Schneiderad 8 auch seitlich leicht versetzt zueinander angeordnet werden können. Der Bereich, der von der Wirkung des Walzrades 8 betroffen ist, wird im Zusammenhang mit der gegenständlichen Erfindung als Schnittbereich 15 bezeichnet.

Das Kabel 14 kann in einer fixen (d.h. nicht mit den rotierenden Teilen mitrotierenden) Klemmvorrichtung 22 gesichert sein, die in Fig. 2 lediglich schematisch angedeutet ist. Die Klemmvorrichtung 22 kann sehr nahe an der Arbeitsradführung angeordnet sein, und das Kabel in seiner runde Querschnittsform zu pressen und während der Bearbeitung darin festzuhalten. Dies ist insbesondere bei weicheren Kabeln vorteilhaft. Gegebenenfalls kann auch das freie Ende des Kabels 4 mit einer entsprechenden inneren Klemmvorrichtung 22' gehalten werden (diese ist in Fig. 2 ebenfalls schematisch angedeutet), wobei die innere Klemmvorrichtung 22' beispielsweise mittels eines Kugellagers (nicht dargestellt) an der Rotationsbasis 2 montiert sein kann. Somit kann die innere Klemmvorrichtung während der Rotation der bewegten Teile stillstehen und das Kabel zentrieren. Die innere Klemmvorrichtung 22' kann dann beispielsweise auch verwendet werden, um den abgetrennten Teil des Schutzmantels 44 nach der Bearbeitung vom Kabel 4 abzuziehen.

An dem der Arbeitsradanordnung 10 in Bezug auf die Rotationsachse 1 in Führungsrichtung 6 gegenüberliegenden Ende der Arbeitsradführung 5 ist ein Gewicht 16 vorgesehen, welches der Arbeitsradführung 5 eine exzentrische Gewichtsverteilung verleiht. Die exzentrische Gewichtsverteilung kann auch ohne zusätzliches Gewicht 16 alleine durch die Form der Arbeitsradführung gewährleistet werden.

Wenn die Rotationsbasis 2 mit der daran über die Linearführungen 7 angeordneten Arbeitsradführung 5 um die Rotationsachse 1 rotiert, wirkt eine Zentrifugalkraft F_{zf} auf das Gewicht 16 (bzw. auf den exzentrischen Schwerpunkt der Arbeitsradführung 5), sodass die Arbeitsradanordnung 10 gegen die äußere Oberfläche des Kabels 4 (bzw. gegen die von den Stützrollen 3, 3' aufgebrachte Gegenkraft) gedrückt wird. Die Andruckkraft der Arbeitsanordnung 10 gegen das Kabel kann somit konstruktiv über die Auslegung des Gewichts 16 und verfahrensmäßig über die Rotationsgeschwindigkeit geregelt werden. Gegebenenfalls kann das Gewicht 16 austauschbar oder veränderbar ausgebildet sein, um die Andruckkraft zu variieren. Die Arbeitsradführung 5 kann gegebenenfalls über Spannmittel, wie etwa Federn, in die "geöffnete" Stellung vorgespannt sein, wobei dann die Arbeitsradanordnung 10 erst mit dem Schutzmantel 14 des Kabels 4 in Kontakt gelangt, wenn die Vorrichtung ausreichend schnell rotiert und die Arbeitsradführung 5 durch die Zentrifugalkraft ausreichend stark gegen die Federkraft gedrückt wird. Alternativ oder zusätzlich dazu kann der Antrieb der rotierenden Teile so geregelt werden, dass das Gewicht 16 im Stillstand oben angeordnet ist, sodass die Arbeitsradanordnung automatisch durch das Eigengewicht nach unten (d.h. in die geöffnete Position) gedrückt wird.

Als "Vorderseite" wird im Zusammenhang mit der gegenständlichen Offenbarung die Seite der Vorrichtung bezeichnet, an der das abzuisolierende Kabel 4 anzuordnen ist, d.h. die in Fig. 1 dargestellte Seite. Der Begriff dient lediglich dem Verständnis und der Orientierung und ist nicht einschränkend auszulegen. Insbesondere wäre es auch möglich, die Anordnung von Rotationsbasis 2 und Arbeitsradführung 5 "umzukehren", sodass die Arbeitsradführung 5 mit den daran angeordneten Elementen "hinter" der Rotationsbasis 2 angeordnet ist, wobei das Kabel dann durch eine in der Rotationsbasis 2 vorgesehene zentrale Öffnung eingesteckt würde, um mit der Arbeitsrad- und Stützrollenanordnung in Kontakt zu kommen. Gegebenenfalls kann die Arbeitsradanordnung 10 auch zwischen Rotationsbasis 2 und Arbeitsradführung 5 angeordnet sein, oder sie kann in einem Innenraum der Arbeitsradführung 5 geschützt angeordnet sein. Die Umsetzung der konstruktiven Änderungen, die für solche alternative Ausführungsformen erforderlich sind, liegt im Können eines Durchschnittsfachmanns.

Das Kabel 4 besteht im Wesentlichen aus einem Leiter 11 oder mehreren Leitern 11, die in einer den Kern des Kabels 4 ausbildenden Leitungsanordnung 12 angeordnet sind. Die einzelnen Leiter 11 können gegeneinander bzw. nach außen hin elektrisch isoliert sein, wobei je nach Kabeltyp weitere Schichten vorgesehen sein können, beispielsweise um einzelne Leiterbündel voneinander abzugrenzen. Um die Leitungsanordnung 12 ist eine Abschirmlage 13 vorgesehen, beispielsweise eine dünne Metallfolie, etwa aus Aluminium oder Kupfer, oder ein filigranes Drahtgeflecht. Gegebenenfalls kann die Abschirmlage 13 auch aus mehreren solchen Lagen bestehen. Derartige Abschirmlagen 13 sind im Fachbereich in unterschiedlichsten Ausführungsformen hinlänglich bekannt und müssen daher hierin nicht detaillierter beschrieben werden. Da die Abschirmlage 13 meist aus einem vergleichsweise teuren Material besteht, sind die Hersteller bestrebt, diese Lage so dünn wie möglich auszuführen. Daher ist die Abschirmlage 13 meist sehr empfindlich. Als äußerste Schicht ist daher um die Abschirmlage 13 der Schutzmantel 14 angeordnet, der die Einheit aus Leitungsanordnung 12 und Abschirmlage 13 gegen äußere Einflüsse schützt.

Zwischen der Abschirmlage 13 und dem Schutzmantel 14 kann gegebenenfalls noch eine zusätzliche sehr dünne Grenzschicht (nicht dargestellt) vorgesehen sein, die beispielsweise aus einem sehr dünnen metallbeschichteten Kunststoffband bestehen kann, das um die Abschirmlage 13 gewickelt ist.

Das Walzrad 8 und das Schneiderad 9 weisen in einer Ebene parallel zu ihrer Rotationsachse jeweils einen unterschiedlichen Querschnitt auf. Insbesondere bildet das Schneiderad 9 eine radial umlaufend Schneidkante 17 aus, während das Walzrad 8 eine stumpfere Randgeometrie als das Schneiderad 9 aufweist, die im Zusammenhang mit der gegenständlichen Offenbarung als "Walzkontur 18" bezeichnet wird. Die Walzkontur 18 des Walzrades 8 ist dabei so auf die Materialparameter der zu schneidenden Schutzmäntel 14 und auf die eingestellten bzw. einstellbaren Andruckkräfte ausgelegt, dass das Walzrad 8 nicht schneidend in das Material des Schutzmantels 14 eindringt, sondern das Material lediglich presst und ein wenig verdrängt.

Im Unterschied dazu wird im Zusammenhang mit der gegenständlichen Erfindung als "Schneidekante" eine Kontur angesehen, die unter diesen Bedingungen in das Material des Schutzmantels 14 schneidend eindringt.

Durch die Dauerbelastung des vom Walzrad 8 ausgeführten "Walzens" des Schutzmantels 14 wird das Material im Schnittbereich 15 qualitativ beeinträchtigt und "mürbe" gemacht, sodass es vom Schneiderad 9 leicht durchtrennt werden kann. Da die Abschirmlage 13 jedoch aus einem anderen Material (i.A. Metall) besteht, als der Schutzmantel 14 (i.A. Kunststoff) bewirkt der Druck der abrollenden Walzkontur 18 auf der Abschirmlage 13 nur eine geringere Verformung, als dies beim Material des Schutzmantels 14 der Fall ist. Sobald die Walzkontur 18 somit in den Bereich der Abschirmlage 13 gelangt, drückt sich das Walzrad 8 weniger tief ein, sodass auch das Schneiderad 9, dass sich ja als Teil der Arbeitsradanordnung 10 parallel mit dem Walzrad 8 mitbewegt, nicht mit der Abschirmlage 13 in Kontakt kommt. Die Abschirmlage 13 kann daher vom Schneiderad 8 nicht angeschnitten werden.

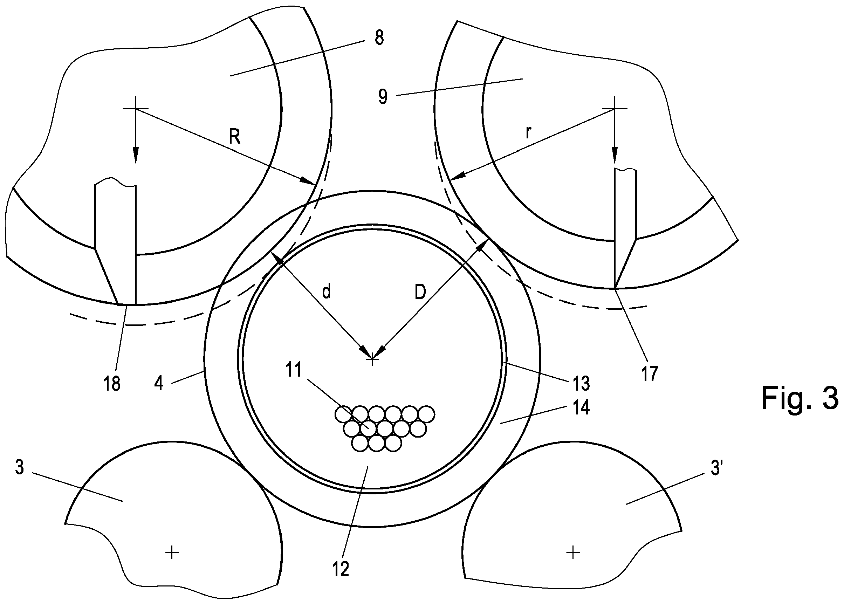

Um diesen Effekt zu verbessern ist der äußere Rand der Walzkontur 18 ein wenig näher an der Rotationsachse 1 angeordnet, als der äußere Rand der Schneidkante 17. Die entsprechenden Maße sind auch in Fig. 3 dargestellt. Die Differenz der (größeren) Entfernung D zwischen der Schneidekante 17 und der Rotationsachse 1 zur (kleineren) Entfernung d zwischen der Walzkontur 18 und der Rotationsachse 1 ist dabei sehr gering und kann beispielsweise zwischen 5 % und 50 %, vorzugsweise zwischen 10 und 20 % der Schichtdicke des zu durchtrennenden Schutzmantels 14 betragen. Beispielsweise kann die Differenz zwischen etwa 50 µm und 200 µm, insbesondere etwa 100 µm betragen.

Die Differenz (D-d) kann auf unterschiedliche Weisen konstruktiv hergestellt werden. In einer sehr einfach herzustellenden Ausführungsform können beispielsweise das Walzrad 8 und das Schneiderad 9 jeweils unterschiedliche Außenradien aufweisen, wobei der Außenradius R des Walzrades 8 größer ist, als der Außenradius r des Schneiderads 9. Dadurch ist es möglich, das Walzrad 8 und das Schneidrad 9 in jeweils derselben Entfernung zur Rotationsachse 1 anzuordnen, was konstruktiv vorteilhaft ist.

Die Radien, Entfernungen und Konturen sind in Fig. 3 schematisch und übersichtlich dargestellt. Das koaxial an der Rotationsachse 1 angeordnete Kabel 4 wird zwischen den beiden Stützrollen 3, 3' und der aufgrund der Zentrifugalkraft gegen die Stützrollen 3, 3' drückenden Arbeitsradanordnung 10 aus Walzrad 8 und Schneiderad 9 in Position gehalten, während die Rollen bzw. Räder um das Kabel herum rotieren. Dabei walzt und verdrängt das Walzrad 8 das Material des Schutzmantels 14 und führt so sehr schnell zu einer gezielten Materialermüdung, sodass das Material an dieser Stelle vom "nachfolgenden" Schneiderad 9 geschnitten werden kann. Das Walzrad 8 dringt dann in diesen Schnitt ein und verdrängt und ermürbt das Material noch mehr.

Sobald das Walzrad 8 das Material der Abschirmlage 13 erreicht hat, wird ein weiteres Verdrängen und Eindringen in das Material aufgrund der höheren Festigkeit von Abschirmlage 13 und Leitungsanordnung 12 verhindert, und das Walzrad rollt auf der Oberfläche der Abschirmlage 13 ab und verhindert, dass die Abschirmalge 13 mit dem Schneiderad 9 in Kontakt gelangt. Diese Lage ist in Fig. 3 durch die strichlierte Umrisslinie von Walzrad 8 und Schneiderad 9 dargestellt. Der Antrieb der Vorrichtung kann dann abgestellt, das Kabel entnommen und der abgetrennte Teil des Schutzmantels 14 abgezogen werden.

Durch die einfache und stabile Konstruktion kann die erfindungsgemäße Vorrichtung mit hohen Geschwindigkeiten betrieben werden, beispielsweise mit etwa 4000 U/min. Der Vorgang des Abisolierens eines Kabels 4 kann dadurch sehr schnell erfolgen, wobei nur wenige Sekunden für einen Abisoliervorgang erforderlich sind. Es ist auch nicht erforderlich, das Durchtrennen des Schutzmantels 14 mit komplexen und fehleranfälligen Vorrichtungen zu messen, da bei der erfindungsgemäßen Vorrichtung ein Durchtrennen der Abschirmlage ohnehin ausgeschlossen ist.

Bei vielen Kabeln ist zwischen dem Schutzmantel 14 und der Abschirmlage 13 noch eine sehr dünne (wenige µm dicke) Grenzschicht aus einem weichen Kunststoffmaterial angeordnet die zusammen mit dem Schutzmantel 14 durchschnitten und entfernt werden muss. Um auch diese dünne Grenzschicht sicher zu durchtrennen kann das Walzrad 8 mit einer Heizvorrichtung beheizbar ausgeführt sein. Das Walzrad 8 wird dabei ausreichend erwärmt, um die Grenzschicht zu schmelzen, sobald das Walzrad in den Bereich dieser Schicht gelangt. Die Beheizung des Walzrades kann auch das Ermürben des Schutzmantels 14 zusätzlich beschleunigen. Gegebenenfalls kann die Grenzschicht und/oder ein verbleibender Teil des Schutzmantels 14 zusätzlich oder alternativ durch Anlegen einer elektrischen Spannung an eines der Elemente der Arbeitsradanordnung mittels Funkenerosion geschwächt bzw. perforiert werden.

In Fig. 3 sind Walzrad 8 und Schneidrad 9 aus Gründen der Darstellbarkeit relativ weit voneinander beabstandet dargestellt. Um das Kabel 4 sicher zwischen der Arbeitsradanordnung 10 und den Stützrollen 3, 3' einzuklemmen ist es jedoch bevorzugt, Walzrad 8 und Schneidrad 9 näher aneinander anzuordnen, wobei der Umfangskonturen der beiden Räder sich gegebenenfalls auch überlappen können, sofern die Radprofile dies zulassen. Radprofile von Walzrad 8 und Schneidrad 9, die ein Überlappen zulassen, sind beispielsweise in Fig. 2 dargestellt. Diese Anordnung nutzt die Eigenschaft des Walzrades 8, das das Material des Schutzmantels 14 nicht nur in direktem Kontakt, sondern auch in einem gewissen Bereich seitlich dieses Kontakts verformt und ermürbt.

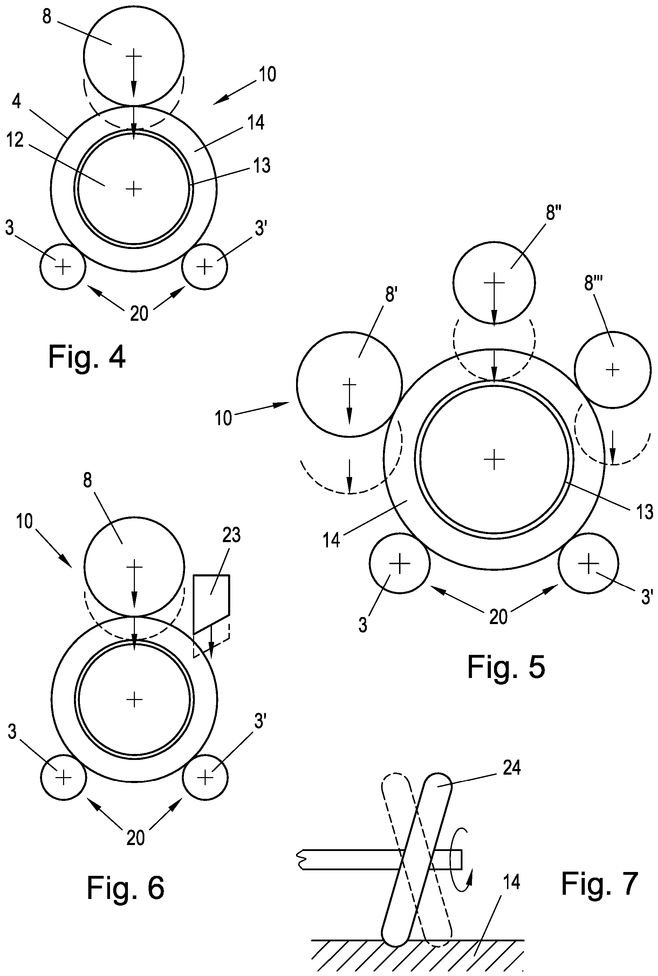

Fig. 4 bis 6 zeigen jeweils ein Kabel 4, welches zwischen eine Stützrollenanordnung 20 (mit jeweils einem Paar Stützrollen 3, 3') und eine Arbeitsradanordnung 10 in analoger Weise eingespannt ist, wie dies zuvor im Zusammenhang mit den Fig. 1 bis 3 beschrieben wurde. Dabei sind die in den Fig. 4 und 6 dargestellten Ausführungsformen nicht erfindungsgemäß und dienen lediglich der Veranschaulichung.

In Fig. 4 weist die Arbeitsradanordnung ein einziges Walzrad 8 auf, welches gegen den Schutzmantel 14 drückend an diesem abrollt und dabei das Mantelmaterial so lange ermüdet, bis es einem Eindringen des Walzrades 8 keinen ausreichenden Widerstand mehr entgegensetzen kann. Das Walzrad 8 dringt dadurch immer weiter in das Material des Schutzmantels 14 ein, bis es an der Abschirmlage 13 angelangt ist, die von dem Walzrad 8 nicht mehr durchdrungen werden kann, zumindest nicht innerhalb der für das Abisolierverfahren vorgesehenen Zeit. Gegebenenfalls kann das Walzrad 8 auch erwärmt werden, um den Ermürbungsvorgang zu beschleunigen. Gegebenenfalls kann die Abrollgeschwindigkeit des Walzrades 8 auch gebremst oder mit einer Antriebseinheit verändert werden, sodass sich aufgrund der Relativgeschwindigkeit zwischen der Walzkontur 18 und der Oberfläche des Schutzmantels 14 eine Reibung ausbildet, die das Material des Schutzmantels 14 zusätzlich ermürbt und überdies eine Erwärmung des Walzrades 8 bzw. des Schutzmantels 14 bewirkt. Ein ähnlicher Effekt kann beispielsweise dadurch erzielt werden, dass die Drehachse des Walzrades 8 nicht parallel zur Längsachse des Kabels 4 angeordnet wird, sondern leicht schräg dazu gestellt wird. Dadurch kann ohne zusätzliche Mittel eine Reibung zwischen der Walzkontur 18 des Walzrades 8 und der Oberfläche des Schutzmantels 14 erzielt werden. Alle diese alternativen Merkmale können auch in beliebiger Weise miteinander und gegebenenfalls mit den zuvor und/oder nachstehend beschriebenen Merkmalen kombiniert angewendet werden, sofern dies technisch möglich ist.

Fig. 5 zeigt eine weitere Variante einer Arbeitsradanordnung 10, die drei Walzräder 8', 8" und 8‴ aufweist. Die Walzräder 8', 8" und 8‴ können unterschiedliche oder gleiche Durchmesser und/oder Randgeometrien aufweisen und sind in Abrollrichtung (d.h. entlang des um den Schutzmantel 14 des Kabels 4 verlaufenden Schnittbereichs 15) hintereinander angeordnet. Wenn die Arbeitsradanordnung 10 mit den drei Walzrädern 8', 8" und 8‴ gemeinsam in Richtung der Stützrollenanordnung 20 bewegt wird (wie dies im Zusammenhang mit der Beschreibung der Fig. 1 bis 3 erläutert ist), dringen die Walzräder 8', 8" und 8‴ - bezogen auf die Richtung zur Achse des Kabels 4 - jeweils mit einer unterschiedlichen Geschwindigkeit in den Schutzmantel 14 ein. Dies kann beispielsweise dazu genutzt werden, dass mit zunehmender Annäherung der Arbeitsradanordnung 10 an die Strützrollenanordnung jeweils unterschiedliche Walzräder 8', 8" und 8‴ am weitesten in den Schutzmantel 14 eingedrungen sind. Bezogen auf die Radialrichtung (d.h. die Richtung von dem Berührungspunkt zwischen dem jeweiligen Walzrad 8 und dem Kabel 4 zum Mittelpunkt des Kabels 4) weisen die einzelnen Walzräder 8', 8", 8‴ auch eine unterschiedliche Anpresskraft auf.

In Fig. 5 ist beispielsweise eine Anfangsposition dargestellt, bei der die äußeren Walzräder 8' und 8‴ am Schutzmantel 14 anliegen, während das mittlere Walzrad 8" den Rand des Schutzmantels 14 noch nicht berührt. Am Ende des Abisoliervorgangs hingegen ist es das mittlere Walzrad 8", das an der Abschirmlage 13 anliegt, wohingegen das (in Fig. 5 links dargestellte) erste Walzrad 8' am weitesten von der Abschirmlage entfernt ist, und das dritte Walzrad 8‴ ebenfalls die Abschirmlage 13 noch nicht erreicht hat. Durch eine geschickt gewählte Kombination an unterschiedlichen Einzelmerkmalen der Walzräder 8', 8" und 8‴ kann somit insbesondere für die Anwendung mit bekannten und immer gleichen Kabeln 4 eine äußerst effektive, schnelle und sichere Abisolierung gewährleistet werden. Gegebenenfalls kann auch eine beliebige größere Anzahl an Rädern vorgesehen sein und die in dieser Druckschrift offenbarten Merkmale der Räder können beliebig in sinnvoller Weise miteinander kombiniert werden. Gegebenenfalls könnte zumindest eines der in Fig. 5 dargestellten Walzräder 8', 8" und 8‴ auch durch ein Schneidrad ersetzt werden, vorausgesetzt, dass das Schneiderad nicht als erstes in Kontakt mit der Abschirmlage gelangt.

Die mehreren Walzräder 8', 8" und 8‴ (unabhängig von deren tatsächlicher Anzahl) können gegebenenfalls in Laufrichtung versetzt zueinander angeordnet sein, wodurch das Material des Schutzmantels 14 beim Abrollen jeweils leicht hin und her gedrückt wird.

Fig. 6 zeigt eine weitere alternative Ausgestaltung der Arbeitsradanordnung 10. Fig. 6 zeigt, dass in der Arbeitsradanordnung nicht nur Räder verwendet werden können, sondern dass diese auch andere, nicht abrollende Elemente umfassen kann. Insbesondere ist in Fig. 6 ein Walzrad 8 dargestellt (ähnlich dem in Fig. 4 gezeigten), das mit einer "außermittig" angeordneten Schneide 23 kombiniert ist. Durch den zuvor beschriebenen Effekt der unterschiedlichen Eindringgeschwindigkeiten (in Richtung zur Kabelachse hin) bei gleicher Vorschubgeschwindigkeit kann die Schneide 23 niemals mit der Abschirmlage 13 in Kontakt gelangen, auch wenn sie im Wesentlichen gleichzeitig oder sogar vor dem Walzrad 8 in Kontakt mit dem Schutzmantel gelangt. Dennoch dringt die Schneide 23 tief genug in das Material des Schutzmantels 14 ein, um in Zusammenwirkung mit dem Walzrad 8 eine vollständige Trennung zu bewirken.

Fig. 7 zeigt ein alternatives Merkmal eines Rades der Arbeitsradanordnung 10, das als Taumelrad 24 ausgebildet ist. Die Drehachse des Taumelrades 24 steht schräg zur Radebene, sodass sich der Berührungspunkt zwischen dem Taumelrad 24 und der Oberfläche des Schutzmantels 14 mit der Umdrehung hin- und herbewegt. Die Darstellung der Fig. 7 ist nicht maßstäblich und dient rein der Veranschaulichung (dies gilt auch für die anderen Figuren). In Fig. 7 ist der Winkel des Taumelrades der Anschaulichkeit halber sehr groß gewählt. In einer realen Umsetzung kann bereits ein viel geringerer Winkel ausreichen, um eine Taumelbewegung zu bewirken, die das Mantelmaterial schnell und effektiv schwächt.

Um eine saubere Schnittkante zu erzielen, kann über eines der Elemente der Arbeitsradanordnung (z.B. über ein Walzrad 8, ein Schneiderad 9, eine Schneide 23 und/oder eine andere Elektrode) eine elektrische Spannung angelegt werden, um den bereits geschwächten und annähernd durchtrennten Schutzmantel 14 und/oder eine zwischen dem Schutzmantel 14 der Abschirmlage 13 angeordnete Grenzschicht mittels Funkenerosion zu schwächen und/oder zu perforieren. Die Spannung wird dabei vorzugsweise an die Regelung der Vorrichtung angepasst und erfolgt beispielsweise erst dann, wenn sich die Arbeitsradanordnung 10 nahe genug an die Abschirmlage 13 angenähert hat und gegebenenfalls in Abstimmung mit der Umdrehung der Arbeitsradanordnung 10. Das Walzrad 8 und/oder das Schneidrad 9 wirken dabei als Elektrode für die Funkenerosion. Gegebenenfalls kann zu diesem Zweck auch eine gesonderte Elektrode an der Arbeitsradanordnung vorgesehen sein.

### Bezugszeichen

Rotationsachse 1
Rotationsbasis 2
Stützrollen 3, 3'
Kabel 4
Arbeitsradführung 5
Führungsrichtung 6
Linearführung 7
Walzrad 8
Schneiderad 9
Arbeitsradanordnung 10
Leiter 11
Leitungsanordnung 12
Abschirmlage 13
Schutzmantel 14
Schnittbereich 15
Gewicht 16
Schneidkante 17
Walzkontur 18
Welle 19
Stützrollenanordnung 20
Ausnehmung 21
Klemmvorrichtung 22
Schneide 23
Taumelrad 24

## Patentansprüche

1. Vorrichtung zum Abisolieren eines Kabels (4), wobei die Vorrichtung eine Stützrollenanordnung (20) und eine Arbeitsradanordnung (10) aufweist, wobei ein Ende des abzuisolierenden Kabels (4) unter Aufbringung einer Andruckkraft zwischen der Arbeitsradanordnung (10) und der Stützrollenanordnung (20) einklemmbar ist, wobei die Einheit aus Arbeitsradanordnung (10) und Stützrollenanordnung (20) um eine Rotationsachse (1) rotierend um das Kabel (4) herum abrollend antreibbar ist, wobei die Arbeitsradanordnung (10) zumindest ein Walzrad (8) und zumindest ein Schneiderad (9) aufweist, die entlang eines Schnittbereichs (15) am Umfang des Kabels (4) abrollen, wobei das zumindest eine Walzrad (8) eine stumpfere Randgeometrie als das Schneiderad (9) aufweist, und dass der radial äußere Rand des zumindest einen Walzrades (8) näher an der Rotationsachse (1) angeordnet ist, als der radial äußere Rand des Schneiderades (9).

2. Vorrichtung nach Anspruch 1, **dadurch gekennzeichnet, dass** die Stützrollenanordnung (20) an einer Rotationsbasis (2) angeordnet ist, wobei die Arbeitsradanordnung (10) an einer Arbeitsradführung (5) angeordnet ist und wobei die Rotationsbasis (2) und die Arbeitsradführung (5) über zumindest eine Linearführung (7) miteinander verbunden sind und entlang einer Quer zur Rotationsachse (1) verlaufenden Führungsrichtung (6) gegeneinander verschiebbar sind, wobei vorzugsweise eine Länge und/oder Position der Linearführung (7) verstellbar ist.

3. Vorrichtung nach Anspruch 2, **dadurch gekennzeichnet, dass** die Arbeitsradführung (5) bezogen auf die Rotationsachse (1) eine exzentrische Gewichtsverteilung aufweist, wobei eine, die Andruckkraft bewirkende, Zentrifugalkraft (F_{zf}) auf die Arbeitsradführung (5) wirkt, wenn die Rotationsbasis (2) mit der daran über die Linearführungen (7) angeordneten Arbeitsradführung (5) um die Rotationsachse (1) rotiert.

4. Vorrichtung nach einem der Ansprüche 1 bis 3, **dadurch gekennzeichnet, dass** das zumindest eine Walzrad (8) beheizbar ist.

5. Vorrichtung nach einem der Ansprüche 1 bis 4, **dadurch gekennzeichnet, dass** das zumindest eine Walzrad (8) einen größeren Radius aufweist, als das Schneiderad (9).

6. Vorrichtung nach einem der Ansprüche 1 bis 5, **dadurch gekennzeichnet, dass** an das zumindest eine Walzrad (8) und/oder Schneiderad (9) und/oder eine Elektrode der Arbeitsradanordnung (10) eine elektrische Spannung anlegbar ist.

7. Vorrichtung nach einem der Ansprüche 1 bis 6, **dadurch gekennzeichnet, dass** die Arbeitsradanordnung (10) zumindest zwei Walzräder (8) aufweist, die gegebenenfalls eine unterschiedliche Randgeometrie aufweisen und/oder dass zumindest ein Element der Arbeitsradanordnung (10) als Taumelrad (24) ausgeführt ist.

8. Verfahren zum Abisolieren eines Kabels (4), wobei ein Ende des abzuisolierenden Kabels (4) unter Aufbringung einer Andruckkraft zwischen einer Arbeitsradanordnung (10) und einer Stützrollenanordnung (20) eingeklemmt wird, wobei die Einheit aus Arbeitsradanordnung (10) und Stützrollenanordnung (20) um eine Rotationsachse (1) rotierend um das Kabel (4) herum abrollend angetrieben wird, **dadurch gekennzeichnet, dass** zumindest ein Walzrad (8) und zumindest ein Schneiderad (9) der Arbeitsradanordnung (10) entlang eines Schnittbereichs (15) am Umfang des Kabels (4) abrollen, wobei das zumindest eine Walzrad (8) eine stumpfere Randgeometrie als das Schneiderad (9) aufweist, und dass der radial äußere Rand des zumindest einen Walzrades (8) näher an der Rotationsachse (1) angeordnet wird, als der radial äußere Rand des Schneiderades (9).

9. Verfahren nach Anspruch 8, **dadurch gekennzeichnet, dass** die Stützrollenanordnung (20) an einer Rotationsbasis (2) angeordnet ist, wobei die Arbeitsradanordnung (10) an einer Arbeitsradführung (5) angeordnet ist und wobei die Rotationsbasis (2) und die Arbeitsradführung (5) über zumindest eine Linearführung (7) miteinander verbunden sind und entlang einer Quer zur Rotationsachse (1) verlaufenden Führungsrichtung (6) gegeneinander verschiebbar sind.

10. Verfahren nach Anspruch 9, **dadurch gekennzeichnet, dass** die Arbeitsradführung (5) bezogen auf die Rotationsachse (1) eine exzentrische Gewichtsverteilung aufweist, wobei eine die Andruckkraft bewirkende Zentrifugalkraft (F_{zf}) auf die Arbeitsradführung (5) wirkt, wenn die Rotationsbasis (2) mit der daran über die Linearführungen (7) angeordneten Arbeitsradführung (5) um die Rotationsachse (1) rotiert.

11. Verfahren nach einem der Ansprüche 8 bis 10, **dadurch gekennzeichnet, dass** das zumindest eine Walzrad (8) der Arbeitsradanordnung (10) entlang eines Schnittbereichs (15) am Umfang des Kabels (4) abrollt und vorzugsweise beheizt wird.

12. Verfahren nach einem der Ansprüche 8 bis 11, **dadurch gekennzeichnet, dass** das zumindest eine Walzrad (8) einen größeren Radius aufweist als das Schneiderad (9).

13. Verfahren nach einem der Ansprüche 8 bis 12, **dadurch gekennzeichnet, dass** an zumindest ein Element der Arbeitsradanordnung (10), insbesondere an das zumindest eine Walzrad (8) und/oder an das Schneiderad (9) und/oder an eine Elektrode, eine elektrische Spannung angelegt wird.

14. Verfahren nach einem der Ansprüche 9 bis 13, **dadurch gekennzeichnet, dass** die Rotationsbasis (2) mit einer maximalen Geschwindigkeit zwischen 3000 U/min und 5000 U/min, vorzugsweise zwischen 3500 U/min und 4500 U/min angetrieben wird.

15. Verfahren nach einem der Ansprüche 8 bis 14, **dadurch gekennzeichnet, dass** zumindest zwei Walzräder (8) der Arbeitsradanordnung (10), die gegebenenfalls eine unterschiedliche Randgeometrie aufweisen, entlang eines Schnittbereichs (15) am Umfang des Kabels (4) abrollen und/oder, dass zumindest ein Element der Arbeitsradanordnung (10) entlang eines Schnittbereichs (15) am Umfang des Kabels (4) taumelnd abrollt.

## Claims

1. Device for stripping a cable (4), wherein the device has at least one support roller arrangement (20) and one work wheel arrangement (10), wherein the end of the cable (4) to be stripped can be clamped with the application of a pressure force between the work wheel arrangement (10) and the support roller arrangement (20), wherein the unit made up of the work wheel arrangement (10) and the support roller arrangement (20) can be driven to rotate around the cable (4) and to roll off thereon, wherein the work wheel arrangement (10) has at least one rolling wheel (8) and at least one cutting wheel (9), which roll off along a cutting region (15) on the circumference of the cable (4), wherein the rolling wheel (8) has a blunter edge geometry than the cutting wheel (9), and that the radially outer edge of the rolling wheel (8) is arranged closer to the axis of rotation (1) than the radially outer edge of the cutting wheel (9).

2. Device according to claim 1, **characterized in that** the support roller arrangement (20) is arranged on a rotation base (2), wherein the work wheel arrangement (10) is arranged at a work wheel guide (5), and wherein the rotation base (2) and the work wheel guide (5) are connected to one another via at least one linear guide (7) and are displaceable relative to one another along a guide direction (6) running transversely to the axis of rotation (1), wherein the length and/or position of the linear guide (7) is preferably adjustable.

3. Device according to claim 2, **characterized in that** the work wheel guide (5) has an eccentric weight distribution in relation to the axis of rotation (1), wherein a centrifugal force (F_{zf}) causing the pressure force acts on the work wheel guide (5), when the rotation base (2), with the work wheel guide (5) arranged thereon via the linear guides (7), rotates around the axis of rotation (1).

4. Device according to one of claims 1 to 3, **characterized in that** the at least one rolling wheel (8) can be heated.

5. Device according to one of claims 1 to 4, **characterized in that** the rolling wheel (8) has a larger radius than the cutting wheel (9).

6. Device according to one of claims 1 to 5, **characterized in that** an electrical voltage can be applied at least to the at least one rolling wheel (8) and/or a cutting wheel (9) and/or an electrode.

7. Device according to one of claims 1 to 6, **characterized in that** the work wheel arrangement (10) has at least two rolling wheels (8) which may have a different edge geometry and/or at least one element of the work wheel arrangement (10) is designed as a wobble wheel (24).

8. Method for stripping a cable (4), wherein the end of the cable (4) to be stripped is clamped with the application of a pressure force between a work wheel arrangement (10) and a support roller arrangement (20), wherein the unit made up of the work wheel arrangement (10) and the support roller arrangement (20) is driven to rotate around the cable (4) and to roll off thereon, **characterized in that** at least one rolling wheel (8) and at least one cutting wheel (9) of the work wheel arrangement (10) rolls off along a cutting region (15) on the circumference of the cable (4), wherein the at least one rolling wheel (8) has a more blunt edge geometry than the cutting wheel (9), and that the radially outer edge of the rolling wheel (8) is arranged closer to the axis of rotation (1) than the radially outer edge of the cutting wheel (9).

9. Method according to claim 8, **characterized in that** the support roller arrangement (20) is arranged on a rotation base (2), wherein the work wheel arrangement (10) is arranged on a work wheel guide (5), and wherein the rotation base (2) and the work wheel guide (5) are connected to one another via at least one linear guide (7) and are displaceable relative to one another along a guide direction (6) running transversely to the axis of rotation (1).

10. Method according to claim 9, **characterized in that** the work wheel guide (5) has an eccentric weight distribution in relation to the axis of rotation (1), wherein a centrifugal force (F_{zf}) causing the pressure force acts on the work wheel guide (5), when the rotation base (2), with the work wheel guide (5) arranged thereon via the linear guides (7), rotates around the axis of rotation (1).

11. Method according to one of claims 8 to 10, **characterized in that** at least one rolling wheel (8) of the work wheel arrangement (10) rolls off along a cutting region (15) on the circumference of the cable (4) and preferably is heated.

12. Method according to one of claims 8 to 11, **characterized in that** the at least one rolling wheel (8) being used has a larger radius than the cutting wheel (9).

13. Method according to one of claims 8 to 12, **characterized in that** an electrical voltage is applied to at least one element of the work wheel arrangement (10), in particular to a rolling wheel (8) and/or a cutting wheel (9) and/or an electrode.

14. Method according to one of claims 9 to 13, **characterized in that** the rotation base (2) is driven at a maximum speed between 3000 rpm and 5000 rpm, preferably between 3500 rpm and 4500 rpm

15. Method according to one of claims 8 to 14, **characterized in that** at least two rolling wheels (8) of the work wheel arrangement (10), which may have a different edge geometry, roll off along a cutting region (15) on the circumference of the cable (4) and/or, that at least one element of the work wheel arrangement (10) rolls off along a cutting region (15) on the circumference of the cable (4) in a wobbling manner.

## Revendications

1. Dispositif permettant de dénuder un câble (4), dans lequel le dispositif présente un agencement de rouleaux de support (20) et un agencement de roues de travail (10), dans lequel une extrémité du câble (4) à dénuder peut être serrée entre l'agencement de roues de travail (10) et l'agencement de rouleaux de support (20) en appliquant une force de pression, dans lequel l'unité constituée de l'agencement de roues de travail (10) et de l'agencement de rouleaux de support (20) peut être entraînée en rotation autour d'un axe de rotation (1) en roulant autour du câble (4), dans lequel l'agencement de roues de travail (10) présente au moins une roue de laminage (8) et au moins une roue de coupe (9) qui roulent le long d'une zone de coupe (15) sur la périphérie du câble (4), dans lequel l'au moins une roue de laminage (8) présente une géométrie de bord plus émoussée que celle de la roue de coupe (9), et en ce que le bord radialement extérieur de l'au moins une roue de laminage (8) est disposé plus près de l'axe de rotation (1) que le bord radialement extérieur de la roue de coupe (9).

2. Dispositif selon la revendication 1, **caractérisé en ce que** l'agencement de rouleaux de support (20) est disposé sur une base rotative (2), dans lequel l'agencement de roues de travail (10) est disposé sur un guidage de roues de travail (5) et dans lequel la base rotative (2) et le guidage de roues de travail (5) sont reliés l'un à l'autre par l'intermédiaire d'au moins un guidage linéaire (7) et peuvent être déplacés l'un par rapport à l'autre le long d'une direction de guidage (6) s'étendant transversalement à l'axe de rotation (1), dans lequel de préférence une longueur et/ou une position du guidage linéaire (7) sont réglables.

3. Dispositif selon la revendication 2, **caractérisé en ce que** le guidage de roues de travail (5) présente une répartition de poids excentrique par rapport à l'axe de rotation (1), dans lequel une force centrifuge (F_{zf}) provoquant la force de pression agit sur le guidage de roues de travail (5) lorsque la base rotative (2) tourne autour de l'axe de rotation (1) avec le guidage de roues de travail (5) disposé sur celle-ci par l'intermédiaire des guidages linéaires (7).

4. Dispositif selon l'une des revendications 1 à 3, **caractérisé en ce que** l'au moins une roue de laminage (8) peut être chauffée.

5. Dispositif selon l'une des revendications 1 à 4, **caractérisé en ce que** l'au moins une roue de laminage (8) présente un rayon supérieur à celui de la roue de coupe (9).

6. Dispositif selon l'une des revendications 1 à 5, **caractérisé en ce qu'une** tension électrique peut être appliquée à l'au moins une roue de laminage (8) et/ou roue de coupe (9) et/ou à une électrode de l'agencement de roues de travail (10).

7. Dispositif selon l'une des revendications 1 à 6, **caractérisé en ce que** l'agencement de roues de travail (10) présente au moins deux roues de laminage (8) qui présentent éventuellement des géométries de bord différentes **et/ou en ce qu'au** moins un élément de l'agencement de roues de travail (10) est réalisé sous forme de roue oscillante (24).

8. Procédé permettant de dénuder un câble (4), dans lequel une extrémité du câble (4) à dénuder est serrée entre un agencement de roues de travail (10) et un agencement de rouleaux de support (20) en appliquant une force de pression, dans lequel l'unité constituée de l'agencement de roues de travail (10) et de l'agencement de rouleaux de support (20) est entraînée en rotation autour d'un axe de rotation (1) en roulant autour du câble (4), **caractérisé en ce qu'au** moins une roue de laminage (8) et au moins une roue de coupe (9) de l'agencement de roues de travail (10) roulent le long d'une zone de coupe (15) sur la périphérie du câble (4), dans lequel l'au moins une roue de laminage (8) présente une géométrie de bord plus émoussée que celle de la roue de coupe (9), **et en ce que** le bord radialement extérieur de l'au moins une roue de laminage (8) est disposé plus près de l'axe de rotation (1) que le bord radialement extérieur de la roue de coupe (9).

9. Procédé selon la revendication 8, **caractérisé en ce que** l'agencement de rouleaux de support (20) est disposé sur une base rotative (2), dans lequel l'agencement de roues de travail (10) est disposé sur un guidage de roues de travail (5) et dans lequel la base rotative (2) et le guidage de roues de travail (5) sont reliés l'un à l'autre par l'intermédiaire d'au moins un guidage linéaire (7) et peuvent être déplacés l'un par rapport à l'autre le long d'une direction de guidage (6) s'étendant transversalement à l'axe de rotation (1).

10. Procédé selon la revendication 9, **caractérisé en ce que** le guidage de roues de travail (5) présente une répartition de poids excentrique par rapport à l'axe de rotation (1), dans lequel une force centrifuge (F_{zf}) provoquant la force de pression agit sur le guidage de roues de travail (5) lorsque la base rotative (2) tourne autour de l'axe de rotation (1) avec le guidage de roues de travail (5) disposé sur celle-ci par l'intermédiaire des guidages linéaires (7).

11. Procédé selon l'une des revendications 8 à 10, **caractérisé en ce que** l'au moins une roue de laminage (8) de l'agencement de roues de travail (10) roule le long d'une zone de coupe (15) sur la périphérie du câble (4) et est de préférence chauffée.

12. Procédé selon l'une des revendications 8 à 11, **caractérisé en ce que** l'au moins une roue de laminage (8) présente un rayon supérieur à celui de la roue de coupe (9).

13. Procédé selon l'une des revendications 8 à 12,
**caractérisé en ce qu'une** tension électrique est appliquée à au moins un élément de l'agencement de roues de travail (10), en particulier à l'au moins une roue de laminage (8) et/ou à la roue de coupe (9) et/ou à une électrode.

14. Procédé selon l'une des revendications 9 à 13, **caractérisé en ce que** la base rotative (2) est entraînée à une vitesse maximale comprise entre 3 000 tr/min et 5 000 tr/min, de préférence entre 3 500 tr/min et 4 500 tr/min.

15. Procédé selon l'une des revendications 8 à 14, **caractérisé en ce qu'au** moins deux roues de laminage (8) de l'agencement de roues de travail (10), lesquelles présentent éventuellement des géométries de bord différentes, roulent le long d'une zone de coupe (15) sur la périphérie du câble (4) **et/ou en ce qu'au** moins un élément de l'agencement de roues de travail (10) roule en oscillant le long d'une zone de coupe (15) sur la périphérie du câble (4).
